Europäisches Patentamt

European Patent Office

Office européen des brevets

(11) Publication number: **0 257 820**
**B1**

(12) **EUROPEAN PATENT SPECIFICATION**

(45) Date of publication of the patent specification:
05.12.90

(21) Application number: **87306698.9**

(22) Date of filing: **29.07.87**

(51) Int. Cl.⁵: **G05B 19/23**, G05B 19/35

(54) Feedback control system for producing PWM control signals.

(30) Priority: **19.08.86 JP 192122/86**

(43) Date of publication of application:
**02.03.88 Bulletin 88/9**

(45) Publication of the grant of the patent:
**05.12.90 Bulletin 90/49**

(84) Designated Contracting States:
**DE FR GB NL**

(56) References cited:
**EP-A- 0 020 024**
**US-A- 3 850 123**
**US-A- 4 374 351**

(73) Proprietor: **SONY CORPORATION,**
**7-35 Kitashinagawa 6-Chome Shinagawa-ku,**
**Tokyo 141(JP)**

(72) Inventor: **Tanaka, Masato, c/o Sony Corporation 7-35,**
**Kitashinagawa 6-chome, Shinagawa-ku Tokyo(JP)**

(74) Representative: **Ayers, Martyn Lewis Stanley et al, J.A.**
**KEMP & CO. 14 South Square Gray's Inn, London,**
**WC1R 5EU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a feedback control system for PWM controlling the rotation, position etc. of an object.

Heretofore, digital servo circuits used for motor rotation control, etc. have been making use of a PWM driving system, which produces a PWM (Pulse Width Modulation) signal for driving a controlled section from control data produced according to control error data.

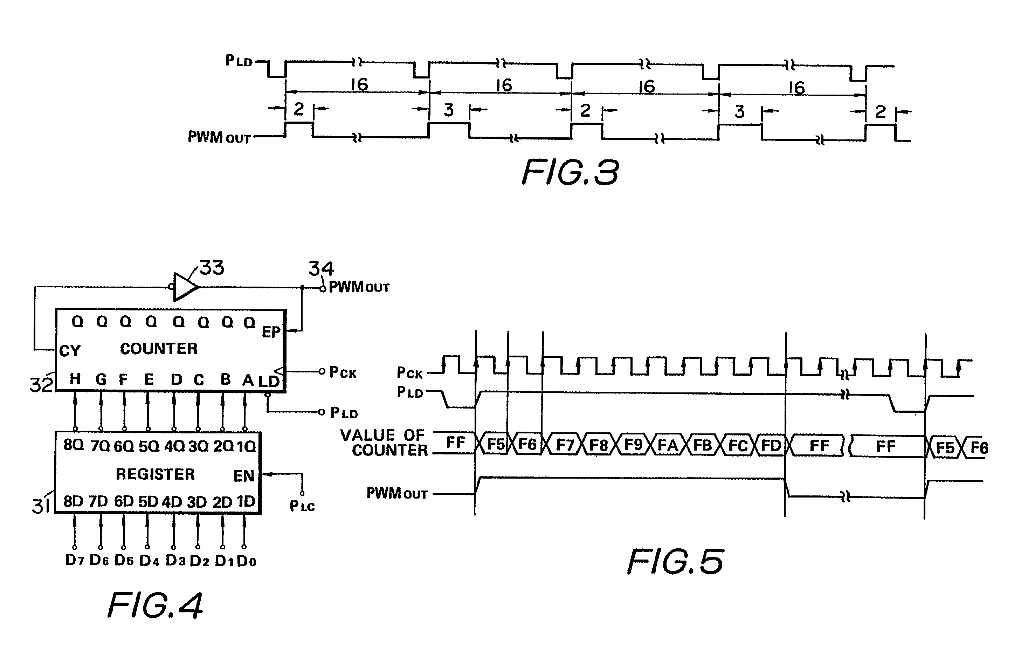

Fig.4 of the accompanying drawings shows an example of the construction of a prior art example of this type of system. In Fig.4, control data for feedback controlling the controlled section is supplied from a microcomputer (not shown) as duty data $D_0$ to $D_7$ through a data bus to a duty register 31 according to control error data provided from the contolled section.

The duty data serves to determine the duty ratio of a PWM signal for feedback controlling the controlled section. Every time a latch pulse $P_{LC}$ is supplied to its enable terminal EN, the duty register 31 latches the duty data $D_0$ to $D_7$ (e.g. hexadecimal data "0A") and supplies the logically complementary data (e.g. hexadecimal data "F5") to preset input terminals A to H of an 8-bit preset counter 32. Every time a load pulse $P_{LD}$ is supplied to its load input terminal LD, the counter 32 presets the complement data supplied from the duty register 31.

At the same time, it counts up master clock pulses $P_{CK}$ supplied to the clock input terminal, as shown in Fig.5, from the preset value "F5", and supplies a carry output to its enable terminal EP through an inverter 33. Further, it supplies the output from an output terminal 34 as a PWM control signal PW-M$_{OUT}$ to the controlled section (not shown). The above operations are performed repeatedly for feedback control.

In the prior art digital servo circuit having the above construction, if the resolution of the PWM control signal PWM$_{OUT}$ is set to 8 bits, e.g., 1/256 steps, so that the carrier frequency of the PWM control signal PWM$_{OUT}$ is set to 32 KHz, a predetermined digital servo operation can be obtained by supplying, to the clock input terminal of the present counter 32, a master clock pulse $P_{CK}$ having a frequency of 8.192 MHz, which is 256 times 32 KHz, the frequency of a load pulse supplied to the load input terminal LD of the preset counter 32.

In the prior art digital servo circuit as described above, however, the frequency of the master clock pulse to be supplied to the preset counter 32 is determined by the resolution of the PWM control signal and carrier frequency. If it is intended to reduce the frequency of the master clock pulse without reducing the resolution, it is necessary to reduce the carrier frequency. Conversely, if the carrier frequency is set to 256 KHz, for instance, in order to reduce the size of a filter provided in a drive circuit of the controlled section, the master clock pulse frequency has to be greatly increased to 64 MHz, so that it becomes difficult to produce the circuit in integrated circuit form.

An object of the present invention is to reduce the clock frequency supplied for the generation of a PWM control signal without reducing the accuracy of control or to permit increase of the carrier frequency of the PWM control signal without increasing the clock frequency.

According to the present invention, there is provided a digital feedback control system for producing a pulse width modulation control signal for feedback controlling an object of control according to control error data, comprising:

means for producing control data for presetting the pulse width of the pulse width modulation control signal according to the control error data; characterised in that it further comprises:

control data latch means for holding said control data;

rounding error latch means for holding a rounding error;

an adder for adding together data latched in said control data latch means and rounding error data latched in said rounding error latch means; and

pulse width modulation control signal generator for producing the pulse width modulation control signal for controlling said object of control according to data consisting of a certain number of upper bits of data provided from said adder;

and in which the rounding error data rounded off by said adder is supplied to and latched in said rounding error latch means.

In one form of the present invention the pulse width modulated control signal generator is provided with a counter for counting input clock pulses, data consisting of a certain number of upper bits of data provided from said adder being initially loaded in said counter to provide a count resultant data of said input clock pulses corresponding to said initially loaded data, thereby producing said pulse width modulation control signal.

As will become apparent from the following description the illustrated embodiment of the invention permits reduction of power consumption and fabrication of integrated circuits to be readily realized by permitting reduction of the clock frequency or increase of the carrier frequency.

The above-mentioned and other features of the invention will become apparent from the following detailed description taken in conjunction with the drawings which illustrate an embodiment of the invention. In the drawings:-

Fig.1 is a block diagram showing the circuit construction of an embodiment of the present invention applied to a servo circuit of a motor;

Fig.2 is a block diagram showing a specific example of the circuit construction of an essential part of the embodiment;

Fig.3 is a timing chart for explaining the operation of the embodiment;

Fig.4 is a block diagram showing the construction of an essential part of a prior art digital servo circuit; and

Fig.5 is a timing chart for explaining the operation of the prior art digital servo circuit.

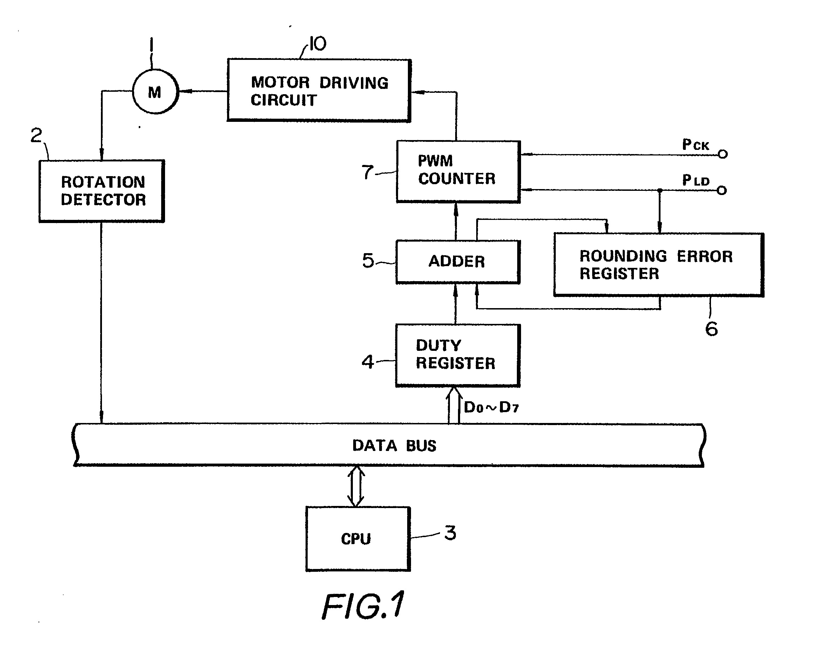

Figs.1 to 3 illustrate an embodiment of the present invention applied to data feedback control.

The block diagram of Fig.1 illustrates the overall construction of the embodiment. A motor 1 constitutes a controlled section. It is driven by a motor driving circuit 10. A rotation detector 2 detects the rotational speed of the motor 1 and supplies data indicating that speed to a microcomputer 3 through a data bus. The microcomputer 3 generates control error data corresponding to a desired rotational speed from the rotational speed data noted above and provides duty data $D_0$ to $D_7$ made up of L (L = 8) bits for producing a PWM signal according to the control error data. The 8-bit duty $D_0$ to $D_7$ are supplied to a duty register 4 through the data bus. The duty ratio of the PWM signal is varied according to the duty data $D_0$ to $D_7$.

The duty register 4 latches the duty data D0 to D7 according to a latch pulse $P_{LC}$ supplied at a predetermined repetition frequency to its enable terminal EN and supplies the complementary data to a data adder 5.

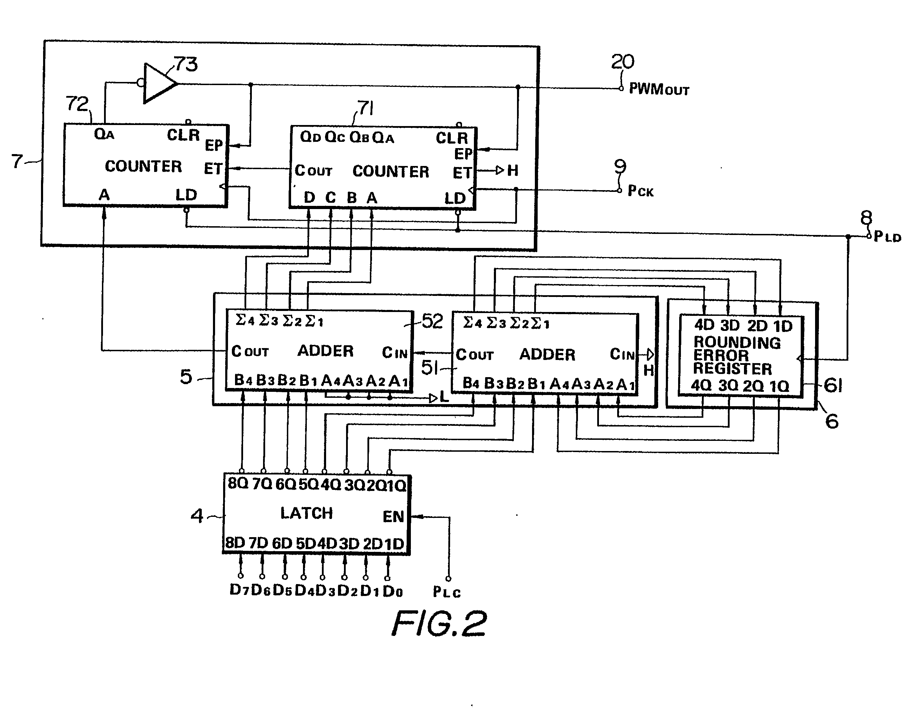

Fig.2 shows the data adder 5. As is shown, it consists of two adders 51 and 52. To the adder 51, which is a 4-bit adder, is supplied lower M (e.g., M = 4) bits of data $D_M$ of the complementary data. To its add data input terminal $A_1$ to $A_4$ is supplied output data of a 4-bit rounding error register 6. It supplies its sum output data to the data input terminal of the rounding error register 6, and also supplies its carry output to a carry input terminal $C_{IN}$ of the adder 52. To the adder 52, which is a 4-bit adder, is supplied the upper N (e.g., N = 4) bits of data $D_N$ of the complementary data and has all its add data input terminals $A_1$ to $A_4$ held at logic "L". The carry input is added to the upper 4-bit data $D_N$. The sum output data is supplied to a preset data input terminal of a preset an N-bit counter 71 (e.g., N = 4) constituting part of the PWM counter 7 of Figure 1. The carry output is supplied to a preset data input terminal of a one-bit preset counter 72 also constituting part of the PWM counter 7.

The rounding error register 6 is constituted by a 4-input D type flip-flop 61, for instance. A PWM carrier signal at a frequency of 256 KHz, for instance, is supplied as a clock pulse $P_{LD}$ from a signal input terminal 8 to its clock input terminal. The sum output data of the 4-bit adder 51 latches for each clock pulse $P_{LD}$.

Further, in the PWM counter 7, the PWM carrier signal is supplied as a load clock pulse $P_{LD}$ from the signal input terminal 8 to the load input terminal of each of the preset counters 71 and 72, and a master clock pulse $P_{CK}$ at a frequency of 4.096 MHz, for instance, is supplied from a signal input terminal 9. The output data of the 4-bit adder 52 is preset for each load clock pulse $P_{LD}$, and master clock pulses $P_{CK}$ are counted up from the preset value. The 4-bit preset counter 71 supplies its carry output to the enable terminal ET of the onebit preset counter 72. The one-bit preset counter 72 supplies the count output from output terminal $Q_A$ through an inverter 73 to its own enable terminal EP and the enable terminal EP of the 4-bit preset counter 71, and also supplies the output as the PWM control signal $PWM_{OUT}$ from a signal output terminal 20 to the motor driving circuit 10. The preset counter 72 performs the above operations repeatedly. When the signal is supplied to the enable terminal EP, the carry signal is inhibited. When the signal is supplied to the enable terminal ET, it is enabled. More specifically, the operational state of the counter 71,72 is determined by the states of the signals at inputs EP and ET as follows:-

| EP | ET | |
|----|----|------------------------|
| H | H | Count |
| H | L | count an RC disabled |
| L | H | count disabled |
| L | L | Count and RC disabled |

In other words, when in the two conditions (EP=H and ET=L) and (EP=L and ET=L), the counter counts, but without producing a carry ouput signal.

In the embodiment of the above construction, with respect to the 8-bit duty data $D_0$ to $D_7$ which are temporarily stored in the duty register 4, the 4-bit adder 51 of the data adder 5 adds the lower 4-bit data $D_M$ and the rounding error data stored in the rounding error register 6, and the 4-bit adder 52 adds the carry output and upper 4-bit data $D_N$. As a result, rounded off upper 4-bit data are obtained. The sum output of the adder 51 is stored in a rounding error register 61. For example, if hexadecimal data "28" are supplied as the 8-bit duty data $D_0$ to $D_7$, the 4-bit adder 52 alternately provides complementary data hexadecimal data "2" and "3" corresponding to the supply of a carry from the adder 51. The complementary data are preset in the PWM counter 7 for counting the master clock pulses $P_{CK}$. Thus, the duty ratio is alternately changed between 2/16 and 3/16, as shown in Fig.3, so that the PWM control signal $PWM_{OUT}$ having a duty ratio of substantially 2.5/16, i.e., 40/256, can be obtained.

More specifically, the feedback control system in this embodiment is provided with a preset counter, which counts clock pulses by presetting, at a predetermined interval, duty data produced on the basis of the control error data, thereby providing a PWM output with the duty ratio corresponding to the duty data noted above as servo output.

The feedback control system comprises a duty register for temporarily storing L (i.e., L = M + N)-bit duty data produced on the basis of the control error data, an L-bit adder 5, and an M-bit rounding error register 6 for temporarily storing the lower M-bit data of the sum output of the data adder for each load pulse $P_{LD}$ The data adder 5 adds the M-bit data temporarily stored in the rounding error register 6 and the lower M bits of the L-bit duty data temporarily stored in the duty register. Clock pulses are counted by presetting the upper N-bit data of the sum output of the data adder in the preset counter 7 for each load pulse, thereby producing the PWM signal.

The feedback control system according to the illustrated embodiment of the present invention is provided with a rounding error register, the data stored in the rounding error register and data stored in the duty register are added together, and the PWM signal is produced according to the upper N bits of the sum data. The lower M-bit data is stored in the rounding error register. Thus, with this construction it is possible to reduce the clock frequency supplied for the generation of the PWM signal without reducing the accuracy of control. Further, it is possible to increase the carrier frequency of the PWM control signal without increasing the clock frequency.

## Claims

1. A digital feedback control system for producing a pulse width modulation (PWM) control signal for feedback controlling an object of control according to control error data, comprising:
means (2, 3) for producing control data (D0–D7) for presetting the pulse width of the pulse width modulation (PWM) control signal according to the control error data; characterised in that it further comprises:
control data latch means (4) for holding said control data
rounding error latch means (6) for holding a rounding error;
an adder (5) for adding together data latched in said control data latch means (4, and rounding error data latched in said rounding error latch means (6); and
pulse width modulation (PWM) control signal generator (7) for producing the pulse width modulation (PWM), control signal for controlling said object of control (1) according to data consisting of a certain number of upper bits of data provided from said adder (5);
and in which the rounding error data rounded, off by said adder (5) is supplied to and latched in said rounding error latch means (6).

2. A feedback control system for producing a pulse width modulation (PWM) control signal according to claim 1, wherein said pulse width modulation (PWM) control signal generator (7) is provided with a counter (71) for counting input clock pulses, data consisting of a certain number of upper bits of data provided from said adder being initially loaded in said counter (71) to provide a count resultant data of said input clock pulses corresponding to said initially loaded data, thereby producing said pulse width modulation (PWM) control signal.

## Patentansprüche

1. Digitales Rückkopplungssteuersystem für die Erzeugung eines Pulsbreiten-Modulations-Steuersignals (PWM) zur Rückkopplungssteuerung eines Objekts nach Maßgabe von Steuer-Fehlerdaten, mit Mitteln (2, 3) zur Erzeugung von Steuerdaten (D0-D7) zum Voreinstellen der Pulsbreite des Pulsbreiten-Modulations Steuersignals (PWM) nach Maßgabe der Steuer-Fehlerdaten, gekennzeichnet durch
Steuerdaten-Speichermittel (4) zum Speichern der Steuerdaten,
Rundungsfehler-Speichermittel (6) zum Speichern eines Rundungsfehlers,
einen Addierer (5) zum Addieren von in den Steuerdaten Speichermitteln (4) gehaltenen Daten und von in dem Rundungsfehler-Speichermitteln (6) gehaltenen Rundungsfehler-Daten, und einen Pulsbreiten-Modulations-Steuersignal-Generator (7) zum Erzeugen des Pulsbreiten-Modulations-Steuersignals (PWM, für die Steuerung eines Objekts (1) nach Maßgabe von Daten, die aus einer bestimmten Anzahl von oberen Datenbits bestehen, die von dem Addierer (5) geliefert werden,
wobei die von dem Addierer (5) gerundeten Rundungsfehler-Daten den Rundungsfehler-Speichermitteln (6) zugeführt und in diesen gehalten werden.

2. Digitales Rückkopplungssteuersystem für die Erzeugung eines Pulsbreiten-Modulations-Steuersignals (PWM) nach Anspruch 1, bei dem der Pulsbreiten-Modulations-Steuersignal-Generator (7) einen zähler (71) zum Zählen von Eingangs-Taktimpulsen aufweist, wobei in den Zähler (71) zuvor von dem Addierer (5) gelieferte, aus einer bestimmten Anzahl von oberen Datenbits bestehende Daten geladen werden, um durch Zählen der Eingangs-Taktimpulse den zuvor geladenen Daten entsprechende, resultierende Zählstandsdaten zu liefern und dadurch das Pulsbreiten-Modulations-Steuersignal (PWM) zu erzeugen.

## Revendications

1. Ensemble numérique de commande par rétroaction destiné à créer un signal de commande modulé par impulsions de largeur variable (PWM) utilisé pour la commande d'un objet commandé en fonction de données d'erreur de commande, comprenant:
un dispositif (2, 3) destiné à créer des données de commande (D0-D7) destinées à prérégler la largeur d'impulsion du signal de commande modulé par impulsions de largeur variable (PWM) en fonction des données d'erreur de commande, caractérisé en ce qu'il comporte en outre:
une bascule (4) de données de commande destinée à contenir les données de commande,
une bascule (6) d'erreur d'arrondissement destinée à contenir une erreur d'arrondissement,
un additionneur (5) destiné à ajouter les données conservées dans la bascule (4) de données de commande et les données d'erreur d'arrondissement conservées dans la bascule (6) d'erreur d'arrondissement, et
un générateur (7) de signaux de commande modulés par impulsions de largeur variable (PWM) destiné à créer le signal de commande modulé par impulsions de largeur variable (PWM) pour la commande de l'objet commandé (1) en fonction de données formées d'un certain nombre de bits supérieurs des données transmises par l'additionneur (5), et

en ce que les données d'erreur d'arrondissement arrondies par l'additionneur (5) sont transmises à la bascule d'erreur d'arrondissement (6) et conservées dans celle-ci.

2. Ensemble de commande par rétroaction destiné à créer un signal de commande modulé par impulsions de largeur variable (PWM) selon la revendication 1, dans lequel le générateur (7) de signaux de commande modulés par impulsions de largeur variable (PWM) a un compteur (71) destiné à compter des impulsions d'horloge d'entrée, des données formées d'un certain nombre de bits supérieurs des données transmises par l'additionneur étant chargées initialement dans le compteur (71) afin qu'elles forment les données résultantes de nombres d'impulsions d'horloge d'entrée correspondant aux données chargées initialement, si bien que le signal de commande modulé par impulsions de largeur variable (PWM) est ainsi produit.

FIG.1

FIG.2

EP 0 257 820 B1

EP 0 257 820 B1

FIG.3

FIG.4

FIG.5